# EUROPEAN PATENT SPECIFICATION

(11) **EP 0 540 156 B1**
(45) Date of publication and mention of the grant of the patent: **08.05.1996**
(21) Application number: 92308237.4
(22) Date of filing: 10.09.1992
(51) Int. Cl.: F16D 65/04

(54) **Double-wrap brake band assembly**
Doppelt geschlungenes Bremsband
Ensemble de bande de frein à double enroulement

(30) Priority: 29.10.1991 US 784537
(43) Date of publication of application: 05.05.1993
(73) Proprietor: BORG-WARNER AUTOMOTIVE TRANSMISSION AND ENGINE COMPONENTS CORPORATION, Sterling Heights, Michigan 48311-8022 (US)
(72) Inventor: Grzesiak, Anthony J., Sauk Village, Illinois 60411 (US); Fenoglio, Robert J., Joliet, Illinois 60432 (US); Geary, Steven P., Joliet, Illinois 60435 (US); Puchalla, Christopher P., Lombard, Illinois 60148 (US); Mayhew, Allan C., Oak Forest, Illinois 60542 (US)
(74) Representative: Allden, Thomas Stanley

(56) References cited:
- WO-A-91/11635
- US-A- 4 602 706
- US-A- 4 757 880
- US-A- 5 012 905

## Description

The present invention relates to double-wrap brake bands.

Commonly double-wrap brake band assemblies are used in the automatic transmission of an automotive vehicle. Most conventional automatic transmissions are of the torque converter type wherein a driven shaft extends from the torque converter into the transmission to a clutch unit having one or more clutch drums. Double-wrap brake bands are utilized with the clutch drums and with suitable hydraulic controls to effect gear changes and control the direction of rotation of the output shaft or driveshaft from the transmission. Double-wrap brake bands have been widely utilized in such transmissions since they commonly present more than twice the holding power of an otherwise similar single-wrap band.

Conventional double-wrap brake bands are presently manufactured from a relatively thick metal strap which is generally formed into three parallel bands having a generally annular shape. Friction linings are applied to the inner peripheral surface of the strap member. Bracket members for engaging the anchor pin and apply pin of the transmission are secured to the ends of the strap member. In US-A-4 602 706 a unitary bracket member comprising both the apply bracket and the reaction bracket is welded to the strap assembly. As a final step of construction, the apply and reaction brackets are separated usually through the elimination of a tie member, to allow the apply bracket and reaction bracket to individually react to force applications received from the apply pin and anchor pin, respectively. However, the heat stresses caused to the metal strap and bracket members by the intense heat of the welding process have sometimes caused distortion to the band structure and increased the potential for stress fractures in the metal during the repetitive operations of the band. Also, problems have been encountered with bands of this construction wherein the narrow apply bracket member which is secured to the centre band does not have sufficient strength to withstand the continual repetitive forces applied during motor vehicle operation.

Another double-wrap band structure, such as that shown in US-A-5 012 905 discloses a similar band structure having three parallel bands formed into an approximate annular shape with friction casings fastened to the inner peripheral surfaces of the bands. The bracket members are secured to the band member by rivets. Use of such rivets successfully reduces the distortion to the band caused by the heat of welding and further acts to reduce the stresses to the band material caused by the welding heat. However, problems have been encountered in using rivets to secure bracket members to band members due to the inability of rivet designs to withstand the repetitive operational stresses and problems in manufacturing resulting from the loose parts required during the manufacturing process.

Another example of the prior art is featured in US-A-4757880 which generally discloses a double-wrap brake band comprising a strap member having three curved bands joined together in a generally parallel relationship by a bracket member to form a substantially annular configuration; the bracket member having a connector member joined to the ends of all three bands, an apply member secured to the end of the central band member, and a reaction member secured to the ends of the outside band members; the strap member including a plurality of slots extending therethrough.

More particularly, in that brake band, like the band structure of the aforementioned US-A-4602706, the bracket member is secured to the strap member by welding, and hence the brake band is subject to the described problems attendant upon the welding process.

It is an object of the present invention to provide a double-wrap brake band which eliminates the disadvantages of the described welded and riveted band structures.

This object is accomplished, in accordance with the invention as claimed, in that the aforesaid generally disclosed double-wrap brake band is characterized in that the bracket member includes a plurality of extruded tabs extending inward from the inner peripheral surface of the bracket member to engage the slots and secure the bracket member to the strap member, the tabs being extruded to produce an equivalent thickness longitudinally along each of the tabs, such thickness being substantially radially parallel to the curvature of the strap member.

Attention is also drawn to WO-A-9111635 which discloses a double-wrap brake band having separate apply and reaction members which are secured to a band member by means of projections extruded from the apply and reaction members being deformably inserted into apertures formed in the band member.

A preferred double-wrap brake band in accordance with the invention is assembled from a preformed and preslotted stamped strap, a preslotted friction lining, and separate apply and reaction members or a stamped one-piece bracket member integrating both the apply and reaction members wherein the extruded tabs of the apply and reaction members fit into oriented prepunched slots located in the strap and extend through the strap member wherein a final clinching process permanently secures the extruded tabs about the periphery of the slot. The preferred band configuration is such that the prestamped slots extend longitudinally along the strap forming a squared oval. This extended squared oval structure provides for greater bearing strength when compared with the more commonly used circle-shaped slots.

In order that the present invention may be well understood there will now be described an embodiment thereof, given by way of example, reference being made to the accompanying drawings, in which :
Fig. 1 is an elevational side view of a double-wrap brake band embodying the present invention;
Fig. 2 is a top elevational view of the band and bracket assembly of Fig. 1;
Fig. 3 is a fragmentary view taken along line 3-3 of Fig. 1;
Fig. 4 is a fragmentary view taken along line 4-4 of Fig. 1;
Fig. 5 is an end section view of the strap member of the same double-wrap brake band showing the friction lining adhered thereto;
Fig. 6 is an elevational view of the preslotted strap member utilized in the same double-wrap band;
Fig. 7 is a sectional view taken along line 7-7 of Fig. 6;
Fig. 8 is an elevational view of the single bracket assembly intended for use with the double-wrap band of this invention;
Fig. 9 is a side elevational view of the bracket assembly of Fig. 8;
Fig. 10 is a sectional view taken along line 10-10 of Fig. 8;
Fig. 11 is a fragmentary view taken along line 11-11 of Fig. 9;
Fig. 12 is a sectional view taken along line 12-12 of Fig. 11;
Fig. 13 is a sectional view taken along line 13-13 of Fig. 11; and,
Fig. 14 is a detail view of an extrusion of the bracket member shown in Fig. 10.

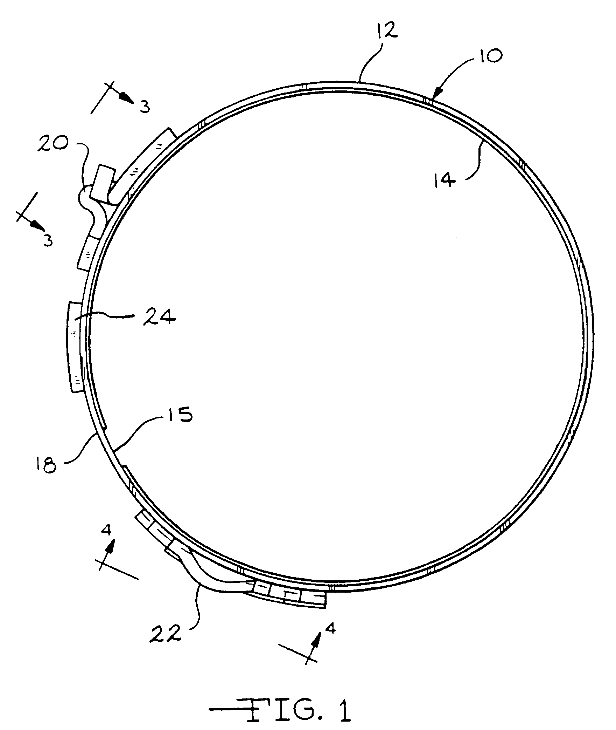

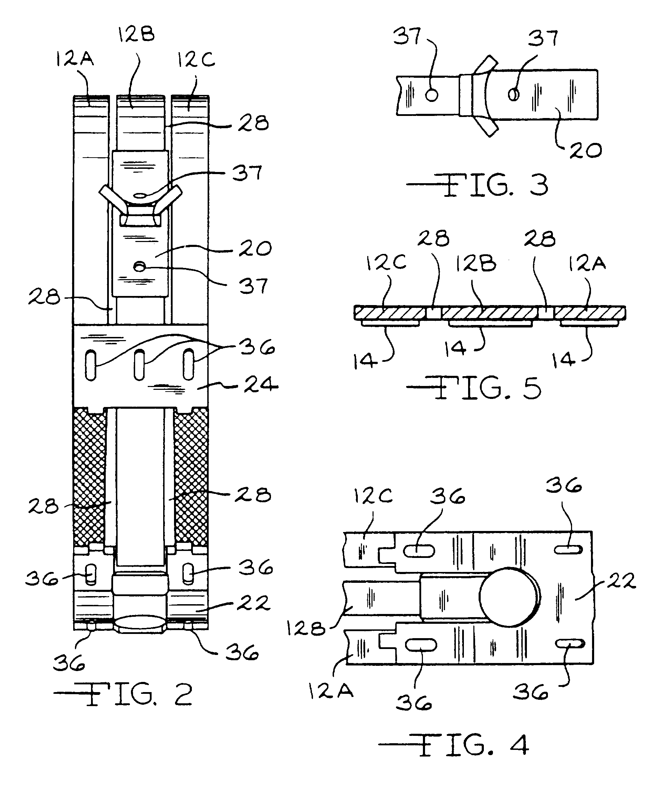

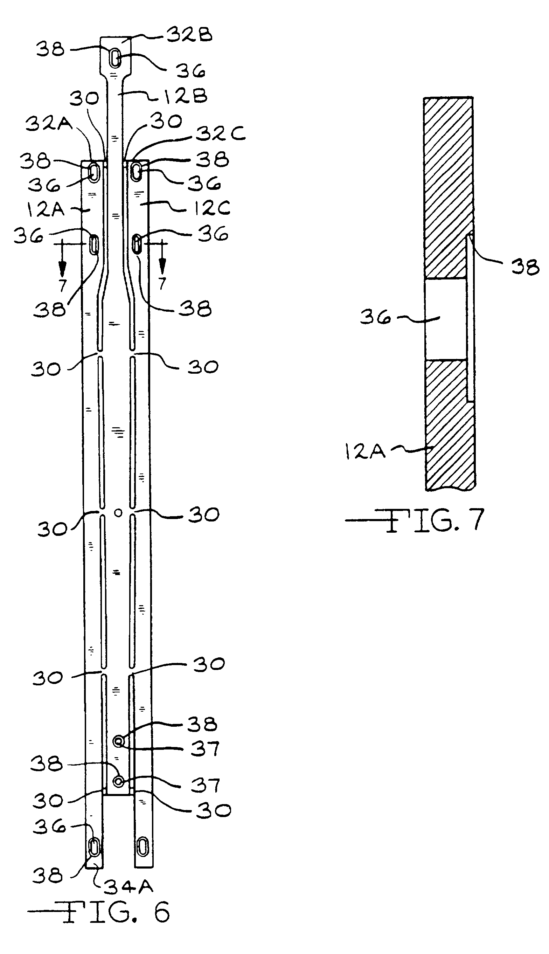

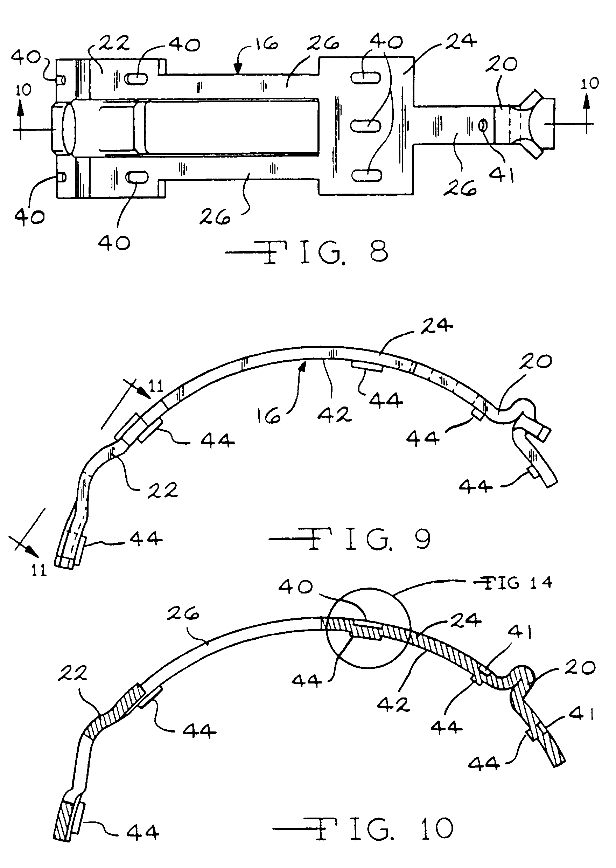

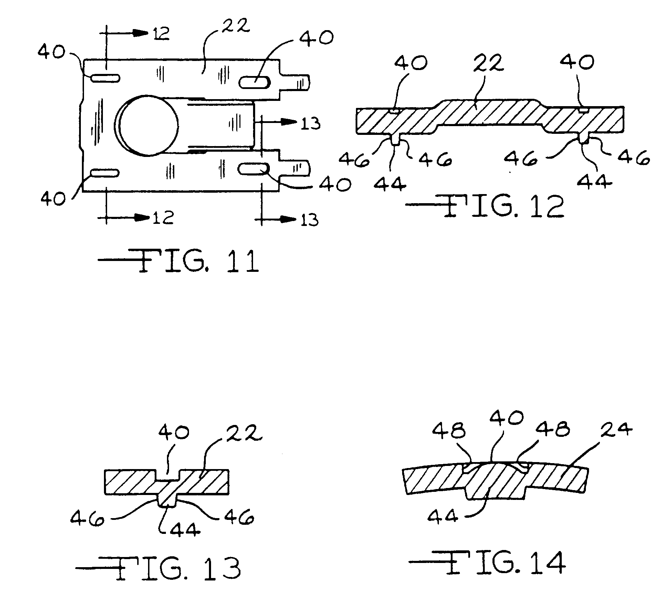

Referring first to Figs. 1-5, a double-wrap brake band includes a strap member 10 which is composed of three bands 12A, 12B, 12C, longitudinally aligned and generally parallel to each other, forming a generally annular configuration. The acceptable gauge of the material from which the strap member 10 is formed lies in the range of .101 cm (.040 inch) to .254 cm (.100 inch). Preferably, the material used for the strap member 10 is MartINSite™ steel, manufactured by the Inland Steel Corporation, in the gauge of .152 cm (.060 inch). As shown in Fig. 5, a friction lining 14 is adhered to the inner peripheral surface 15 of the three bands 12 by an acceptable method. A bracket member 16, preferably manufactured from 1536 SAE heat treated steel, is adhered to the outer peripheral surface 18 of the strap member 10. The bracket member 16 incorporates together an apply member 20 as shown in Figs. 1, 2 and 3, a reaction member 22 as shown in Figs. 1, 2 and 4, and a connector member 24 as shown in Figs. 1 and 2. The three bracket members 20, 22, 24 are, preferably, integrally interconnected, as shown in Figs. 8-10 by tie members 26. Alternatively, the apply member 20, reaction member 22 and connector member 24, may be individual components designed to be attached to the strap member 10.

Referring now specifically to Figs. 6 and 7, the structure of the strap member 10 utilized to secure the bracket member 16 to the strap member 10 is shown. The strap member 10 is manufactured so that the three generally parallel band members 12A, 12B, 12C are separated by longitudinally extending slots 28 which are separated by transversely aligned ties 30. One end 328 of the middle band member 12B extends beyond the ends 32A, 32C of the outside band members 12A, 12C. At the opposed end of the strap member 10, the opposed ends 34A, 34C of the outside band members 12A, 12C extend beyond the opposed end 34B of the middle band member 12B, as shown in Fig. 6. Longitudinally oriented oval-like slots 36 are located on the three band members 12A, 12B, 12C, extending therethrough. The slots 36 are, preferably, of a generally squared oval configuration and extend longitudinally along the band members 12A, 12B, 12C to prevent any potential interference with the cross-sectional strength of the individual band members. Each slot 36 is coined around its perimeter 38 as shown in detail in Fig. 7. Coining the perimeter 38 prestresses the material around the perimeter the slot 36, thereby capturing any stress fractures which may occur during use of the band in the prestressed perimeter 38 and preventing such stress fractures from progressing into the body of each band member 12A, 12B, 12C. As shown in Fig. 6, the holes 37 to which the apply member 20 is attached are generally circular in shape and coined. However, it is envisioned that such holes 37 may also be designed to be longitudinal in shape as are shown in the remaining slots 36.

Referring now to Figs. 8-14, a preferred a one-piece bracket member 16 is shown in detail. The one-piece bracket member 16 is formed to have generally the same radial curvature as the strap member 10. The one-piece bracket member 16 includes a reaction member 22, apply member 20, and connector member 24. The bracket member 16 includes a plurality of longitudinal extrusions 40 located in the reaction member 22 and connector member 24. The apply member 20 includes a pair of circular extrusions 41. The extrusions 40, 41 are formed by locally extruding the bracket material through the inner peripheral surface 42 of the bracket member 16 to create a series of tabs 44. Preferably the tabs 44 are designed to engage the slots 36 and holes 37 of the strap member 10 and extend therethrough. The tabs 44 are tapered along their longitudinal sides 46 to enhance the ability of the tabs 44 to engage the slots 36 and position the bracket member 16 tightly upon the strap member 10. Further, as shown in detail in Fig. 14, the strap member 10 is extruded so that the ends 48 of the longitudinally oriented squared oval are sunken deeper into the strap material to produce an extruded tab 44 having a longitudinal radial curvature which parallels the radius of the strap member 10. Thus, since the extruded tabs 44 extend evenly through the material of the strap member 10, the fastening forces of the extruded tabs 44 are evenly distributed and enhanced.

After the bracket member 16 is properly oriented on the strap member 10, the tabs 44 are clinched in any acceptable manner. For instance,and preferably, the tabs 44 may be clinched by use of a longitudinally oriented centreline punch which spreads the portion of the tab extending through the slot 36 into an expanded and engaged position with the slot perimeter 38. After the bracket member 16 is fixed in place on the strap member 10, the tie members 26 are eliminated, thus separating the apply member 20, reaction member 22 and connector member 24. The transversely aligned ties 30 located between the band members 12A, 12B, and 12C are also eliminated. Thus, the only interconnection between the three ends, 12A, 12B, 12C, is through the connector member 24 which is engaged to the slot 36 located in the end 32B of the middle band 12B and the opposed ends 34A and 348 of the outside bands 12A, 12C.

The engagement between the bracket member 16 and strap member 10 may be further enhanced by providing a structural adhesive, such an epoxy which cures at the bonding temperature, the interface between the bracket member 16 and strap member 10.

The preferred double-wrap brake band as described above provides a band member having enhanced strength characteristic at the apply and reaction areas. Production quality of the band member is enhanced through the elimination of loose parts, such as rivets, and the elimination of the need for applying excessive heat to the band member through welding of the bracket members onto the strap member. Therefore, the band member retains more control over distortion of the member as the result of heat treatment.

## Claims

1. A double-wrap brake band comprising a strap member (10) having three curved bands (12A, 12B, 12C) joined together in a generally parallel relationship by a bracket member (16) to form a substantially annular configuration; the bracket member (16) having a connector member (24) joined to the ends (32A, 32C, 34B) of all three bands (12A, 12B, 12C), an apply member (20) secured to the end (32B) of the central band member (12B), and a reaction member (22) secured to the ends (34A, 34C) of the outside band members (12A, 12C); the strap member (10) including a plurality of slots (36) extending therethrough; characterized in that the bracket member (16) includes a plurality of extruded tabs (44) extending inward from the inner peripheral surface (42) of the bracket member (16) to engage the slots (36) and secure the bracket member (16) to the strap member (10), the tabs (44) being extruded to produce an equivalent thickness longitudinally along each of the tabs (44), such thickness being substantially radially parallel to the curvature of the strap member (10).

2. A brake band as claimed in claim 1, wherein the slots (36) are coined about their perimeter (38).

3. A brake band as claimed in claim 1 or claim 2, wherein the slots (36) are oval-shaped and longitudinally oriented on the strap member (10).

4. A brake band as claimed in any of claims 1 to 3, wherein the tabs (44) are clinched to the strap member (10) and, thereby, pressed into engagement with the perimeters (39) of the slots (36).

5. A brake band as claimed in any of claims 1 to 4, wherein the tabs (44) are tapered inward from the inner peripheral surface (42) of the strap member (10).

## Patentansprüche

1. Doppelt geschlungenes Bremsband mit einem Streifenteil (10), das drei gekrümmte Bänder (12A, 12B, 12C) aufweist, die in paralleler Anordnung durch ein Klammerteil (16) miteinander verbunden sind, um eine im wesentlichen ringförmige Konfiguration zu bilden, wobei das Klammerteil (16) aufweist: ein Verbindungsteil (24), das mit den Enden (32A, 32C, 34B) aller drei Bänder (12A, 12B, 12C) verbunden ist, ein Einrückteil (20), das an dem Ende (32B) des mittleren Bandes (12B) befestigt ist, und ein Reaktionsteil (22), das an den Enden (34A, 34C) der äußeren Bänder (12A, 12C) befestigt ist, wobei das Streifenteil (10) mehrere durch es hindurchgehende Schlitze (36) aufweist, dadurch gekennzeichnet, daß das Klammerteil (16) mehrere extrudierte Laschen (44) aufweist, die sich von der inneren Umfangsfläche (42) des Klammerteiles (16) nach innen erstrecken, um die Schlitze (36) zu erfassen und das Klammerteil (16) an dem Streifenteil (10) zu befestigen, wobei die Laschen (44) extrudiert sind, um eine entsprechende Dicke in Längsrichtung entlang jeder der Laschen (44) zu erzeugen, wobei diese Dicke im wesentlichen radial parallel zu der Krümmung des Streifenteils (10) ist.

2. Bremsband nach Anspruch 1, bei dem die Schlitze (36) an ihrem Umfang (38) ausgespart sind.

3. Bremsband nach Anspruch 1 oder 2, bei dem die Schlitze (36) eine ovale Form haben und auf dem Streifenteil (10) in Längsrichtung orientiert sind.

4. Bremsband nach einem der Ansprüche 1 bis 3, bei dem die Laschen (44) mit dem Streifenteil (10) verspannt und dadurch in Anlage mit dem Umfang (39) der Schlitze (36) gepreßt sind.

5. Bremsband nach einem der Ansprüche 1 bis 4, bei dem die Laschen (44) von der inneren Umfangsfläche (42) des Streifenteils (10) aus nach innen abgeschrägt sind.

## Revendications

1. Bande de frein à double enroulement comprenant un élément de ruban (10) comportant trois bandes incurvées (12A, 12B, 12C) réunies en relation généralement parallèle par un élément de patte (16) afin de former une configuration sensiblement annulaire, l'élément de patte (16) comportant un élément de liaison (24) uni aux extrémités (32A, 32C, 34B) des trois bandes (12A, 12B, 12C), un élément d'application (20) fixé à l'extrémité (32B) de l'élément de bande centrale (12B), et un élément de réaction (22) fixé aux extrémités (34A, 34C) des éléments de bande extérieure (12A, 12C), l'élément de ruban (10) comprenant une multitude de fentes (36) s'étendant au travers de celui-ci, caractérisé en ce que l'élément de patte (16) comprend une multitude de languettes extrudées (44) s'étendant vers l'intérieur à partir de la surface périphérique intérieure (42) de l'élément de patte (16) afin de s'engager dans les fentes (36) et de fixer l'élément de patte (16) à l'élément de ruban (10), les languettes (44) étant extrudées afin de produire une épaisseur équivalente dans le sens longitudinal le long de chacune des languettes (44), cette épaisseur étant sensiblement parallèle radialement à la courbure de l'élément de ruban (10).

2. Bande de frein selon la revendication 1, dans laquelle les fentes (36) sont estampées autour de leur périmètre (38).

3. Bande de frein selon la revendication 1 ou la revendication 2, dans laquelle les fentes (36) sont de forme ovale et sont orientées longitudinalement sur l'élément de ruban (10).

4. Bande de frein selon l'une quelconque des revendications 1 à 3, dans laquelle les languettes (44) sont assujetties à l'élément de ruban (10) et, par conséquent, poussées en prise avec les périmètres (39) des fentes (36).

5. Bande de frein selon l'une quelconque des revendications 1 à 4, dans laquelle les languettes (44) sont biseautées vers l'intérieur à partir de la surface périphérique intérieure (42) de l'élément de ruban (10).
